# EUROPÄISCHE PATENTSCHRIFT

(11) **EP 1 745 920 B1**
(45) Veröffentlichungstag und Bekanntmachung des Hinweises auf die Patenterteilung: **12.11.2008**
(21) Anmeldenummer: 06014328.6
(22) Anmeldetag: 11.07.2006
(51) Int. Cl.: B29D 30/42, B29D 30/46, B65G 47/53, B65H 20/06

(54) **Vorrichtung zum Schneiden und Verspleissen von Bandabschnitten eines klebrigen Bandes, insbesondere eines Cord-, vorzugsweise eines Textilcordbandes**
Apparatus for cutting and splicing of sections of a sticky strip, in particular cord strip, preferably textile cord strip
Dispositif pour couper et joindre des section d'une bande collante, en particulier bande renforcée, de préférence bande renforcée textile

(30) Priorität: 21.07.2005 DE 102005034782
(43) Veröffentlichungstag der Anmeldung: 24.01.2007
(73) Patentinhaber: Karl Eugen Fischer GmbH Maschinenfabrik, 96224 Burgkunstadt (DE)
(72) Erfinder: Hoffmann, Bernd, 96224 Burgkunstadt (DE)
(74) Vertreter: Blaumeier, Jörg

(56) Entgegenhaltungen:
- EP-A1- 1 046 599
- EP-A1- 1 380 523
- EP-A2- 1 431 023
- JP-A- 6 254 992
- JP-A- 2001 232 696
- JP-A- 2004 268 457
- US-A- 5 743 375

## Beschreibung

Die Erfindung betrifft eine Vorrichtung zum Schneiden und Verspleißen von Bandabschnitten eines klebrigen Bandes, insbesondere eines Cord-, vorzugsweise eines Textilcordbandes, umfassend eine Schneideinrichtung mit zugeordneter Fördereinrichtung zum Bewegen des zu schneidenden Bandes durch die Schneideinrichtung sowie eine Spleißeinrichtung zum Verspleißen der Kante des geschnittenen Bandabschnitts mit einer Kante des zuvor verspleißten Bandabschnitts, sowie eine der Schneideinrichtung unmittelbar nachgeschaltete Aufnahmeeinrichtung für den geschnittenen Bandabschnitt vorgesehen ist.

Mit einer Vorrichtung der eingangs genannten Art ist es möglich, verspleißte Endlosbänder herzustellen, insbesondere Cord- beziehungsweise vorzugsweise Textilcordbänder, wie sie, insbesondere im Falle letzterer, beispielsweise in der Reifenindustrie zur Herstellung der Reifenkarkasse benötigt werden. Bei bekannten Vorrichtungen wird das klebrige Band, das beispielsweise mit Textilfäden durchzogen ist, von einer großen Bandrolle mittels einer Fördereinrichtung abgezogen und mittels dieser durch eine Schneideinrichtung durchgezogen. Die Schneideinrichtung, beispielsweise eine Schere, schneidet in ihrer Länge definierte Bandabschnitte ab. Ein solcher geschnittener Bandabschnitt wird an einer Transporteinrichtung, üblicherweise einem Bandförderer übergeben und zur Seite zu einer benachbart angeordneten Spleißeinrichtung gefördert, wo die nachlaufende Kante des zuvor gespleißten Bandabschnitts leicht abgesenkt wird, so dass die vorlaufende Kante des anzuspleißenden neuen Bandabschnitts darüber geschoben werden kann. Anschließend wird die Spleißeinrichtung betätigt, die beiden Bandkanten werden überlappend verspleißt.

Mit der Förderung des geschnittenen Bandabschnitts von der Schneideinrichtung zur Spleißeinrichtung ist ein gewisser Zeitaufwand verbunden, der sich nachteilig auf die maximale Takt- oder Zykluszeit der Vorrichtung auswirkt. Gleichwohl ist bei bekannten Vorrichtungen diese horizontale Förderung zwingend erforderlich, um den geschnittenen Bandabschnitt zu der zwar benachbart, jedoch entfernt zur Schneideinrichtung stehenden Spleißeinrichtung zu transportieren und insbesondere die beiden Kantenabschnitte der zu verspleißenden Bandabschnitte dort miteinander zu überlappen.

Eine die Merkmale des Oberbegriffs des Patentanspruchs 1 zeigende Vorrichtung ist aus JP 2001-232696 A bekannt. Zu schneidendes Bandmaterial wird von einer Rolle über ein erstes Förderband abgezogen. Diesem Förderband ist ein zweites Förderband nachgeschaltet, das in die gleiche Richtung fördert. Zwischen den beiden Förderbändern befindet sich eine Schneideinrichtung. Seitlich an das zweite Förderband, das der Schneideinrichtung unmittelbar nachgeschaltet ist, befindet sich eine Spleißeinrichtung mit einem nachfolgenden Förderband. Das zweite, der Schneideinrichtung unmittelbar nachgeschaltete Förderband ist als Aufnahmeeinrichtung für einen geschnittenen Bandabschnitt ausgebildet. Vorgesehen sind drei separate Förderbandabschnitte, die in die gleiche Richtung arbeiten wie das vorgeschaltete erste Förderband. Zwischen diesen Förderbandabschnitten befinden sich Walzen, deren Längsachse in Bandförderrichtung liegt, die mithin also quer zur Förderrichtung abrollen. Dieses Walzenpaket ist vertikal verstellbar. Die Funktion ist derart, dass nach dem Verspleißen die zuvor abgesenkten Walzen angehoben werden, so dass das gespleißte Bandstück nur noch auf den Walzen liegt und nicht mehr auf den Förderbändern. Das Band kann nun senkrecht zur Bandförderrichtung abgezogen und durch die Spleißeinrichtung hindurchgezogen werden, nachdem es auf den Walzen abrollt. Banddeformationen werden hierüber verhindert.

Der Erfindung liegt damit das Problem zugrunde, eine Vorrichtung anzugeben, die eine Erhöhung der Takt- oder Zykluszeit ermöglicht.

Zur Lösung dieses Problems ist bei einer Vorrichtung der eingangs genannten Art erfindungsgemäß vorgesehen, dass die Aufnahmeeinrichtung zum Bewegen des Bandabschnitts in eine tiefer liegende Spleißposition, in welcher die zu verspleißende Kante des Bandabschnitts in einer definierten Lagebeziehung zur mit ihr zu verspleißenden Kante des zuvor gespleißten Bandabschnitts, die sich in der der Aufnahmeeinrichtung unmittelbar nachgeschalteten Spleißeinrichtung befindet, positioniert ist, zwischen einer oberen Stellung und einer unteren Stellung bewegbar ist.

Bei der erfindungsgemäßen Vorrichtung ist die Spleißeinrichtung in die Schneideinrichtung integriert, beide sind unmittelbar über die zwischengeschaltete Aufnahmeeinrichtung miteinander gekoppelt. Über die zwischen einer oberen und einer unteren Position, mithin also höhenverstellbare Aufnahmeeinrichtung, wird der geschnittene Bandabschnitt in der oberen Stellung aufgenommen und in eine tiefer liegende Spleißposition bewegt. In dieser Spleißposition ist der geschnittene Bandabschnitt bzw. seine zu verspleißende Bandkante automatisch in einer vorab definierten, das unmittelbar nachfolgende Verspleißen zulassenden Lagebeziehung bezüglich der nachlaufenden Kante des zuvor gespleißten Spleißabschnittes positioniert. Diese nachlaufende Bandkante befindet sich in der Spleißeinrichtung, die zu verspleißende Bandkante des geschnittenen Bandabschnitts wird also von der Aufnahmeeinrichtung unmittelbar in die Spleißeinrichtung beim Bewegen in die untere Stellung bewegt und automatisch definiert positioniert, vorzugsweise überlappt. Selbstverständlich ist nicht nur ein überlappendes Verspleißen damit möglich, vielmehr kann auch ein Stumpfspleißen erfolgen, wozu die abgesenkte Bandkante des zu verspleißenden, geschnittenen Bandabschnitts automatisch in eine unmittelbare, stumpfe Anlage zur zweiten Bandkante beim Bewegen der Aufnahmeeinrichtung in die untere Stellung positioniert wird.

Bei der erfindungsgemäßen Vorrichtung, bei der die Spleißeinrichtung in die Schneideinrichtung integriert ist und beide unmittelbar über die Aufnahme gekoppelt sind, entfällt der zeitaufwendige Förderschritt mittels des Förderbandes nebst nachgeschalteter Überlappung oder Positionierung der zur verspleißenden Bandkanten wie im einleitend beschriebenen Stand der Technik der Fall. Vielmehr wird durch eine einfache, äußerst kurz bemessbare Bewegung der Aufnahmeeinrichtung mit einer vertikalen Bewegungskomponente die Überführung des Bandabschnitts von der Schneideinrichtung unmittelbar in die Spleißeinrichtung unter exakter, definierter automatischer Positionierung der beiden Kanten zueinander ermöglicht. Der Spleißvorgang kann innerhalb eines wesentlich kürzeren Zeitintervalls nach dem Schneidvorgang erfolgen, so dass der Takt oder Zyklus gegenüber bisher bekannten Vorrichtungen bestehend aus separater Schneidvorrichtung und separater Spleißvorrichtung, die wie beschrieben über das Transportband gekoppelt sind, erhöht werden. Während mit bekannten Systemen ein Ausstoß von ca. 20 Spleiß/Minute erreicht wird, lässt die erfindungsgemäße Vorrichtung einen Ausstoß von bis zu 27 Spleiß/Minute bei hervorragender Positionierung der Bandkanten zueinander und Einhaltung vorgegebener Toleranzen zu.

Die Aufnahmeeinrichtung kann dabei eine reine Vertikalbewegung durchführen, d.h., sie wird von der oberen in die untere Stellung vertikal bewegt. Denkbar ist es auch, von der oberen Bandaufnahmeposition in die Spleißposition in einer Schwenkbewegung zu fahren, d.h., die Aufnahmeeinrichtung, die in jedem Fall als Hubeinrichtung ausgebildet ist, schwenkt zwischen den beiden Stellungen hin und her. Der Bewegungsweg kann in jedem Fall äußerst kurz bemessen werden, nachdem aufgrund der Integration der Spleißeinrichtung in die Schneideinrichtung beide optimal zueinander positioniert werden können, so dass Verfahrwege von wenigen Zentimetern realisierbar sind. Im Endeffekt ist es lediglich erforderlich, den geschnittenen Bandabschnitt um wenige Zentimeter tief in die Ebene zu bewegen, in der der zuvor gespleißte Bandabschnitt liegt, unter Berücksichtigung des erforderlichen Arbeitsbereichs der Spleißeinrichtung.

Die Aufnahmeeinrichtung, die als Hubtisch ausgebildet sein kann, lagert bevorzugt in der oberen Stellung bereits den noch zu schneidenden Bandabschnitt, der mittels der Fördereinrichtung über die Aufnahme bewegt wird, auf, so dass dieser zumindest während des Schnitts nicht freiliegt, bzw. durchhängt. Als Fördereinrichtung kann jede beliebige Fördereinrichtung verwendet werden, insbesondere wird bei der erfindungsgemäßen Vorrichtung eine Fördereinrichtung verwendet, wie sie in der deutschen Patentanmeldung DE 101 13 379 beschrieben ist, auf die hiermit ausdrücklich Bezug genommen wird. Bei dieser Förder- oder Vorschubeinrichtung wird die vorlaufende Bandkante mittels einer horizontal bewegbaren, bei der erfindungsgemäßen Vorrichtung über die Aufnahmeeinrichtung bewegbaren Zange gegriffen und während des Schnitts gelöst, so dass der geschnittene Bandabschnitt aus der Zange fallen und nur auf der Aufnahmeeinrichtung aufliegen kann.

Wenngleich der Bewegungsweg von der Schneidposition oder Schneidebene in die Spleißposition oder Spleißebene sehr kurz ist, ist es zur Einhaltung der geforderten Toleranzen und Positionierungsgenauigkeiten zweckmäßig, wenn die Aufnahmeeinrichtung zum lagefesten Fixieren des Bandabschnitts zumindest nach dem Schneiden ausgebildet ist, bevorzugt aber auch bereits während des Schneidens, so dass das Band nicht nur über die Fördereinrichtung, also die zuvor beschriebene Zange, sondern auch aktiv an der Aufnahmeeinrichtung fixiert ist. Denkbar ist die Verwendung beliebiger Fixiermittel, bevorzugt werden jedoch Ansaugmittel verwendet, d.h., an der Aufnahmeeinrichtung wird ein Vakuum erzeugt, über das der flächige Bandabschnitt auf die Aufnahmeeinrichtung gesaugt wird.

Zum Abziehen der verspleißten Bandabschnitte, mithin also des Endlosbandes ist zweckmäßigerweise eine Transporteinrichtung vorgesehen, die sich erfindungsgemäß bis in den Arbeitsbereich der Aufnahmeeinrichtung, die in der unteren Stellung mit ihrer den Bandabschnitt tragenden Oberseite in der Transportebene der Transporteinrichtung oder tiefer liegt, erstreckt. Bewegt sich die Aufnahmeeinrichtung in die untere Stellung, erfolgt automatisch eine Übergabe des geschnittenen und noch zu verspleißenden Bandabschnitts an die Transporteinrichtung, deren Oberseite die Spleißebene definiert, nachdem auf ihr bereits der zuvor gespleißte Bandabschnitt aufliegt. Die Fixierung des Bandabschnitts z. B. über das Vakuum an der Aufnahmeeinrichtung wird bei der Übergabe gelöst bzw. reißt bei der Übergabe automatisch ab.. Nach dem Verspleißen werden die gespleißten Abschnitte über die Transporteinrichtung abgezogen, die Aufnahmeeinrichtung verfährt sofort wieder in die obere Aufnahmeposition, nachdem infolge des Abzugs des nunmehr gespleißten Bandabschnitts der Weg wieder freigegeben ist. Für eine sichere Aufnahme wie auch Übergabe ist es dabei zweckmäßig, wenn die Transporteinrichtung aus mehreren parallelen Transportbändern und/oder die Aufnahmeeinrichtung aus mehreren parallelen Aufnahmeabschnitten oder Tischabschnitten besteht. Diese Ausgestaltung ermöglicht es, dass beide ineinander fahren können.

Nachdem es zum exakten Verspleißen der beiden Bandkanten auf eine genaue Positionierung derselben bezüglich einander ankommt, sind zweckmäßigerweiße ein oder mehrere Sensorelemente, insbesondere Lichtschranken, zum Erfassen der Hinterkante des zuvor gespleißten Bandabschnitts vorgesehen, wobei der Betrieb der oder einer Transporteinrichtung zum Fördern der verspleißten Bandabschnitte in Abhängigkeit der Sensorerfassung erfolgt. Über diese Sensorelemente und den erfassungsabhängig gesteuerten Bewegungsbetrieb kann folglich eine hochgenaue, reversible Positionierung der Hinterkante erfolgen, so dass diese stets in einer definierten Spleißposition in der Spleißeinrichtung positioniert ist. Ein solches Materialtransportsystem unter Verwendung solcher Sensorelemente und einer Transporteinrichtung in Verbindung mit einer Spleißeinrichtung ist beispielsweise in dem deutschen Patent DE 101 19 508 beschrieben, auf das hiermit ebenfalls ausdrücklich Bezug genommen wird.

Zum Anpassen an unterschiedliche Bandbreiten und mithin an unterschiedliche Spleißpositionen ist es besonders vorteilhaft, wenn die Spleißeinrichtung bezüglich der Aufnahmeeinrichtung horizontal verfahrbar ist. Diese horizontale Verfahrbarkeit ist jedoch nicht nur zum gezielten Anpassen an bekannte Breitenänderungen zweckmäßig, sondern auch zur Erfassung etwaiger Lageänderungen der Längskante des von einer großen Rolle abgezogenen klebrigen Bandes. Um eine stets exakte Positionierung der Spleißeinrichtung bezüglich der ankommenden Kante des zu verspleißenden Bandabschnitts zu ermöglichen, sieht eine besonders vorteilhafte Weiterbildung der Erfindung den Einsatz einer Erfassungseinrichtung zum Erfassen der Lage wenigstens einer Längskante des zu schneidenden Bandes vor, wobei die Spleißeinrichtung in Abhängigkeit der erfassten Kantenlage positionierbar ist. Während des Betriebs verfährt die Transporteinrichtung, über die die gespleißten Abschnitte abgezogen werden, immer um den gleichen Weg. Würde sich nun die Lage der Längskante des abgezogenen klebrigen Bandes verändern, so käme es zu Positionierungsungenauigkeiten infolge der Schwankungen der Kantenlage. Um diese ausgleichen zu können, wird bei gleichem Transportweg die Spleißeinrichtung nachgeführt, nachdem infolge der Längskantenerfassung stets die genaue Position der über die Aufnahmeeinrichtung abgesenkten und in der Spleißeinrichtung abgelegten zu verspleißenden Bandkante bekannt ist. Dabei ist es denkbar, die beiden Längskanten des abgezogenen Bandes zu erfassen, um eine Art Plausibilitätsprüfung durchführen zu können, nachdem die generelle Bandbreite bekannt ist. Während der Verfahrbewegung der Spleißeinrichtung, die über geeignete Linearführungen und Antriebe gelagert ist, bleibt das hintere Bandende in der Spleißeinrichtung fixiert, wird also um die wenigen Millimeter, um die die Spleißeinrichtung während dieser Lagekorrektur verfährt, mitgenommen. Zur Beibehaltung der Lagebeziehung des oder der Sensorelemente, die der Erfassung der Hinterkante des gespleißten Abschnitts dienen, bezüglich der Spleißeinrichtung bzw. der Spleißleiste selbst sind das oder die Sensorelemente zweckmäßigerweise zusammen mit der Spleißeinrichtung verfahrbar.

Schließlich kann vorgesehen sein, an der Schneideinrichtung und/oder der Spleißeinrichtung Bandklemmelemente zum bedarfsabhängigen Fixieren des Bandes oder des gespleißten Bandabschnitts vorzusehen. Bei diesen handelt es sich um geeignete Niederhalter in Stempel- oder Leistenform, die entsprechend angesteuert werden. Insbesondere die zum Fixieren des gespleißten Bandabschnitts vorgesehenen Bandklemmelemente, die der Spleißeinrichtung zugeordnet sind (bevorzugt sind, wie gemäß dem genannten deutschen Patent 101 19 508 beschrieben, mehrere separat ansteuerbare Klemmelemente), sind über jeweils ein zugeordnetes Sensorelement ansteuerbar, so dass sich eine exakte Positionierung und Klemmung des Bandabschnitts realisieren lässt.

Neben der Vorrichtung betrifft die Erfindung ferner ein Verfahren zum Herstellen eines Endlosbands aus einzelnen miteinander verspleißten Bandabschnitten eines klebrigen Bands, insbesondere eines Cord-, vorzugsweise eines Textilcordbands, das sich dadurch auszeichnet, dass von dem mittels einer Fördereinrichtung durch eine Schneideinrichtung geförderten Band ein Bandabschnitt geschnitten und mittels einer der Schneideinrichtung unmittelbar nachgeschalteten Aufnahmeeinrichtung in eine gegenüber der Schneidposition tieferliegende Spleißposition bewegt wird, in welcher die zu verspleißende Kante des Bandabschnitts automatisch in einer definierten Lagebeziehung zur mit ihr zu verspleißenden Kante eines zuvor gespleißten Bandabschnitts, die in der der Aufnahmeeinrichtung unmittelbar nachgeschalteten Spleißeinrichtung ruht, positioniert ist, wonach unmittelbar die beiden Bandabschnitte verspleißt werden.

Die Bewegung des geschnittenen Bandabschnitts über die Aufnahmeeinrichtung kann eine reine Vertikalbewegung sein, d.h., die Aufnahmeeinrichtung und mit ihr der Bandabschnitt werden in einer direkten Vertikalbewegung von oben nach unten geführt. Alternativ ist auch eine Schwenk- oder Parallelogrammbewegung, die eine vertikale Bewegungskomponente aufweist, zum Überführen des Bandabschnitts in die nur wenig tieferliegende Spleißebene möglich. Dabei ist es zweckmäßig, wenn das mit der Fördereinrichtung über die in der oberen Bandaufnahmestellung befindliche Aufnahmestellung bewegte Band bereits während des Schneidens auf der Aufnahmeeinrichtung aufliegt und bevorzugt auch bereits während des Schneidens an der Aufnahmeeinrichtung fixiert, insbesondere über eine Saugeinrichtung angesaugt wird.

Weiterhin ist es zweckmäßig, wenn kontinuierlich die Lage wenigstens einer Längskante des zu schneidenden Bands mittels einer Erfassungseinrichtung ermittelt und die Spleißeinrichtung in Abhängigkeit der erfassten Kantenlage durch horizontales Verfahren bezüglich der Aufnahmeeinrichtung positioniert wird. Für eine Einhaltung der geforderten Toleranzen sowie zur Sicherstellung eines optimalen Schneid- und/oder Spleißvorgangs ist schließlich vorgesehen, das Band während des Schneidens und/oder den bereits gespleißten Bandabschnitt während des Anspleißens eines weiteren, unmittelbar vorab geschnittenen Bandabschnitts oder während der Horizontalverschiebung der Spleißeinrichtung über Bandklemmelemente zu fixieren.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung der erfindungsgemäßen Vorrichtung in einer Frontansicht,
- Fig. 2: eine Prinzipdarstellung der erfindungsgemäßen Vorrichtung aus Fig. 1 in einer Seitenansicht,
- Fig. 3A, 3B: eine Seiten- und eine Frontansicht der erfindungsgemäßen Vorrichtung in der Grund- oder Ausgangsstellung zu Beginn eines Taktes,
- Fig. 4A, 4B: die Vorrichtung aus Fig. 3 beim oder nach dem Fördern bzw. Ziehen des Bandes durch die Schneideinrichtung und Positionieren über der Aufnahmeeinrichtung,
- Fig. 5A, 5B: die Vorrichtung aus Fig. 4 während bzw. unmittelbar nach dem Schneidvorgang,
- Fig. 6A, 6B: die Vorrichtung aus Fig. 5 nach Durchführung der Vertikalbewegung der Aufnahmeeinrichtung und Ablegen des gespleißten Bandabschnitts unter Überlapp in der Spleißeinrichtung,
- Fig. 7A, 7B: die Vorrichtung aus Fig. 6 während des Spleißvorgangs,
- Fig. 8A, 8B: die Vorrichtung aus Fig. 7 während des Abtransports des gespleißten Bandes,
- Fig. 9A, 9B: die Vorrichtung aus Fig. 8 nach Beendigung des Abtransports des gespleißten Bandes und Positionieren der Hinterkante in der Spleißeinrichtung, und
- Fig. 10A, 10B: die Vorrichtung aus Fig. 9 mit neu durchgezogenem Cordband.

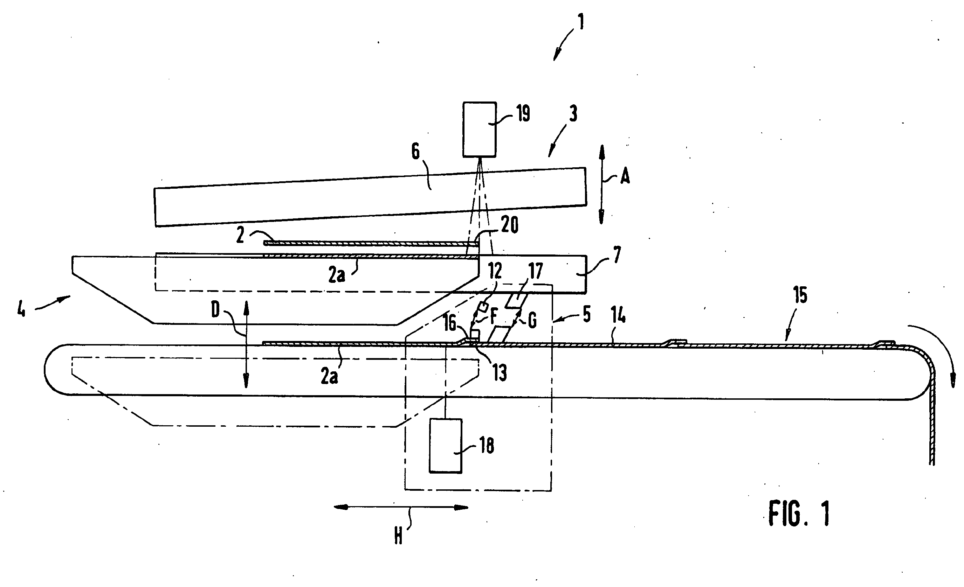

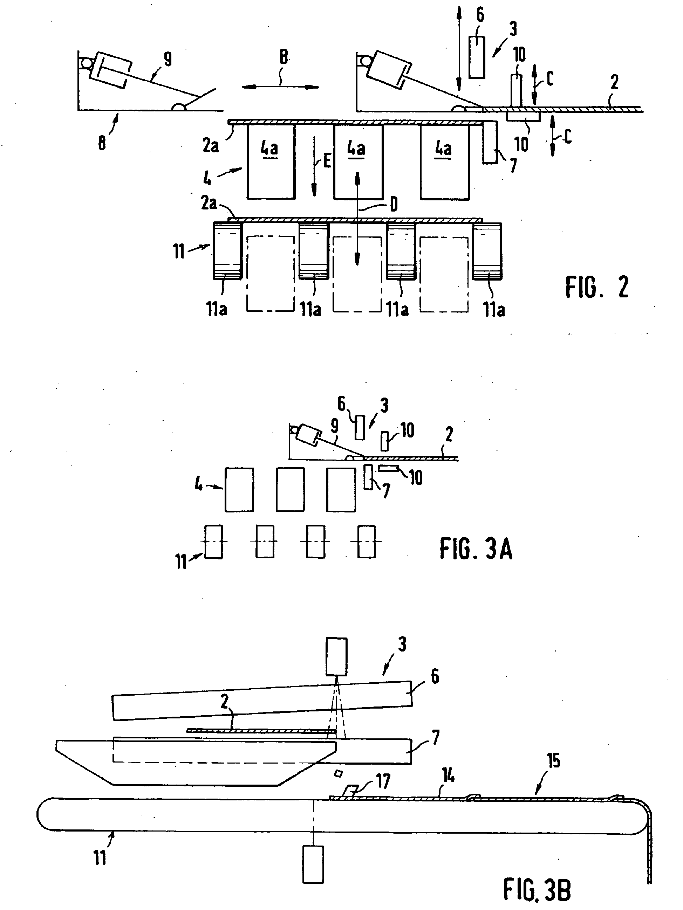

Die Fig. 1 und 2 zeigen in Form von Prinzipskizzen eine erfindungsgemäße Vorrichtung 1 zum Schneiden und Spleißen eines klebrigen endlosen Cordbandes 2, das als Kalandermaterial von einer nicht näher gezeigten Rolle abgezogen wird. Die Vorrichtung 1 umfasst an einem gemeinsamen mehrteiligen Maschinengestell angeordnet bzw. integriert eine Schneideinrichtung 3, eine dieser unmittelbar nachgeschaltete Aufnahmeeinrichtung 4 und eine wiederum dieser unmittelbar nachgeschaltete Spleißeinrichtung 5. Dargestellt sind nur die zentralen, für das Verständnis erforderlichen Vorrichtungskomponenten, sonstige Teile wie das Vorrichtungsgestell, Linearführungen, Antriebe etc. sind aus Übersichtlichkeitsgründen nicht näher gezeigt.

Die Schneideinrichtung 3 ist im gezeigten Beispiel als Schere mit einem Obermesser 6 und einem Untermesser 7 dargestellt, wobei das Obermesser, wie durch den Doppelpfeil gezeigt ist, zum Schneiden nach unten bewegt wird (Pfeil A). Das Cordband 2 wird über Fördereinrichtung 8, wie sie beispielsweise in der deutschen Patentanmeldung 101 13 397 beschrieben ist, abgezogen und zwischen der Schneideinrichtung 3 hindurch gezogen. Die Fördereinrichtung umfasst eine Rückzugszange 9, sie ist zwischen einer in Fig. 2 gezeigten Bandgreifposition (in Fig. 2 rechts gezeigt) und einer Löseposition (in Fig. 2 links gezeigt), in der das durchgezogene und geschnittene Band freigegeben wird, horizontal wie über den Doppelpfeil B gezeigt verfahrbar. Mit dieser Fördereinrichtung wird also das Cordband, das zwischen zwei Bandklemmelementen 10, die, durch die Pfeile C dargestellt, vertikal bewegbar sind, und die bevorzugt als Niederhalterleisten ausgeführt sind, hindurch und in die Schneidposition gezogen. Ist die Schneidposition erreicht, verfährt das Obermesser 6 nach unten, das Cordband 2 wird geschnitten, so dass man einen geschnittenen Bandabschnitt 2a erhält, der auf der Aufnahmeeinrichtung 4 aufliegt, auf welcher er bereits bevorzugt während des Schneidens aufliegt. Die Aufnahmeeinrichtung ist, wie durch den Pfeil D dargestellt, als vertikal beweglicher Hubtisch ausgeführt, d.h., sie kann zwischen einer angehobenen oberen Stellung, in welcher sie den Bandabschnitt 2a aufnimmt, und einer unteren Übergabestellung, worauf nachfolgend noch eingegangen wird, vertikal bewegt werden. Die Aufnahmeeinrichtung 4 besteht hier aus mehreren, im gezeigten Beispiel drei, separaten Aufnahmeabschnitten 4a, die, wie Fig. 2 gestrichelt zeigt, in der unteren Position zwischen die einzelnen Transportbänder 11a einer Transporteinrichtung 11, die zum Abziehen des gespleißten Bandes dient, einfahren.

Die Aufnahmeeinrichtung 4 ist, wie beschrieben, vertikal bewegbar, wozu ein geeigneter Antrieb, beispielsweise ein Kurbeltrieb, angetrieben über einen Servomotor oder eine Antriebspneumatik oder -hydraulik etc. vorgesehen ist, die jedoch nicht näher gezeigt ist.

Mit der Vertikalbewegung der Aufnahmeeinrichtung 4 wird der Bandabschnitt 2a von einer oberen Schneidposition in eine untere Spleißposition bewegt, wie in Fig. 1 und Fig. 2 dargestellt und durch den Pfeil E angegeben ist. In dieser liegt er zum einen auf den Oberseiten der Transportbänder 11 auf. Zum anderen befindet er sich auch bereits innerhalb des Arbeitsbereichs der Spleißeinrichtung 5 bzw. der Spleißleiste 12, wie in Fig. 1 dargestellt ist. In der Spleißeinrichtung 5 bzw. in dem unmittelbaren Arbeitsbereich der Spleißleiste 12 liegt das hintere Ende bzw. die hintere Bandkante 13 des zuvor gespleißten Bandabschnitts 14, der bereits Teil des endlosen Materialstreifens 15, bestehend aus einer Vielzahl gespleißter einzelner Bandabschnitte, ist.

Durch die vertikale Absenkbewegung des geschnittenen Bandabschnitts 2a wird dieser nun ebenfalls in den unmittelbaren Arbeitsbereich der Spleißleiste 12 bewegt und, siehe Fig. 2, definiert mit seiner vorlaufenden Kante 16 über die Hinterkante 13 des zuvor gespleißten Bandabschnitts 14 überlappt. Das heißt, mit dem Moment, mit dem der Bandabschnitt 2a auf den Transportbändern 11a durch die vertikale Absenkbewegung der Aufnahmeeinrichtung 4 abgesenkt ist, befindet er sich mit seiner zu verspleißenden Bandkante automatisch bereits in der Spleißeinrichtung bzw. im Arbeitsbereich der Spleißleiste 12 und automatisch in der Spleißposition im Überlapp bzw. je nach Ausgestaltung in stumpfer Anlage zur zweiten zu verspleißenden Bandkante. Nun kann unmittelbar der Spleißvorgang beginnen, wozu die Spleißleiste 12 wie durch den Doppelpfeil F dargestellt ist, entsprechend bewegt wird, gleiches gilt für ein oder mehrere Bandklemmelemente 17, die den gespleißten Materialstreifen 15 in der Spleißeinrichtung fixieren, wie durch den Doppelpfeil G angedeutet ist. In Fig. 1 ist ferner ein oder mehrere Sensorelemente 18, bevorzugt in Form geeigneter Lichtschranken, gezeigt, die der Erfassung der Hinterkante 13 des über die Transporteinrichtung 11 abgezogenen, gespleißten Bandes dienen. Hierüber erfolgt die Steuerung der Klemmelemente 17 zum Fixieren des gespleißten Bandabschnitts 14 mit seiner Hinterkante 13 in optimaler Position bezüglich der Spleißleiste 12. Spleißeinrichtung 5 nebst Transporteinrichtung 11 nebst Sensorelementen 18 sind, wie bereits beschrieben, Teil eines Materialtransportsystems, wie es im deutschen Patent DE 101 19 508 beschrieben ist.

Die Spleißeinrichtung 5 einschließlich der Sensorelemente 18, die in fester Lagebeziehung zur Spleißleiste 12 angeordnet sind, ist, wie sich aus Fig. 1 über den Doppelpfeil H ergibt, horizontal bezüglich der Aufnahmeeinrichtung 4 verfahrbar. Das heißt, es ist möglich, die Spleißeinrichtung 5 bzw. die Spleißleiste 12 in einer beliebigen Position bezüglich der Aufnahmeeinrichtung 4 zu positionieren. Hierüber ist es möglich, auf unterschiedliche Lagen der zu verspleißenden Bandkante des neu angeförderten, geschnittenen Bandabschnitts reagieren zu können, um die Kanten optimal bezüglich einander positionieren zu können. Zu diesem Zweck ist eine Erfassungseinrichtung 19, bevorzugt eine Kamera (z. B. CCD-Kamera) mit nachgeschalteter Auswerteeinrichtung der Kamerainformation vorgesehen, die der Erfassung der Längskante 20 des endlosen Cordbandes 2 dient. Sobald hier eine Kantenschwankung, also ein seitlicher Versatz festgestellt wird, wird die Spleißeinrichtung 5 nebst Sensorelementen 18 bei geklemmter Hinterkante 13 entsprechend horizontal nachgeführt, um diese Positionsschwankung ausgleichen zu können. Hierüber wird sichergestellt, dass der Bandabschnitt 2 mit seiner etwas horizontal versetzten Bandkante trotz dieses Versatzes optimal bezüglich der Hinterkante 13 des zuvor gespleißten Bandabschnitts 14 positioniert wird. Alternativ zum Nachführen der Spleißeinheit wäre es denkbar, einen erfassten Kantenversatz durch Korrektur der Kantenlage vor oder nach dem Durchziehen durch die Schneideinrichtung durch eine Verschiebung des Cordbands oder der Bandrolle zu korrigieren.

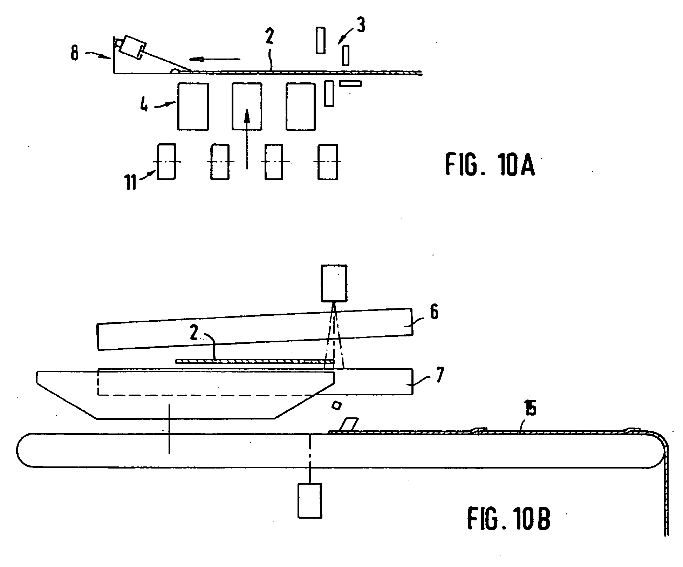

Die Fig. 3 - 10 mit ihren Einzelfiguren A und B zeigen die unterschiedlichen Arbeitsschritte der erfindungsgemäßen Vorrichtung. Dabei zeigen die Figuren A die Vorrichtungsansicht gemäß Fig. 2, während die Figuren B die Vorrichtungsansicht gemäß Fig. 1 zeigen.

Die Fig. 3A, 3B zeigen die Vorrichtung in der Grundstellung. Die Schneideinrichtung 3 ist geöffnet, das Obermesser ist nach oben gefahren, die Rückzugszange 9 befindet sich in einer Position direkt im Bereich der Schneideinrichtung und klemmt die Vorderkante des Cordbands 2. Die Bandklemmelemente 10 sind geöffnet, das untere Klemmelement 10, das zum Greifen der Bandkante mit der Rückzugszange 9 das Bandende leicht anhebt, ist in der unteren, das obere Bandklemmelement in der oberen Position. Die Aufnahmeeinrichtung 4 befindet sich ebenfalls in der oberen Position, während der zuvor gespleißte Bandabschnitt 14 in der Spleißeinrichtung über das oder die Bandklemmelemente 17 geklemmt ist, während die Spleißleiste in der angehobenen Position ist.

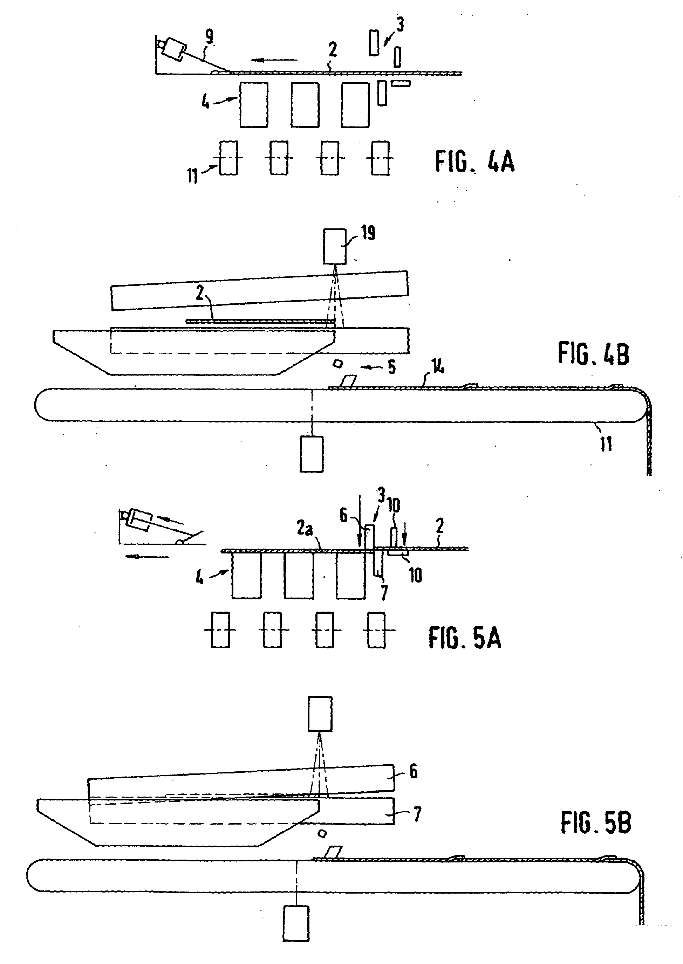

Im nächsten in den Fig. 4A, 4B gezeigten Schritt verfährt die Rückzugszange 9 auf die benötigte Breite durch die Schneideinrichtung 3 bzw. zieht das zu schneidende Band durch die Schneideinrichtung 3. Der Antrieb der Rückzugszange 9 erfolgt bevorzugt über zwei Achsen, so dass verschiedene Abschnittswinkel für das Material realisiert werden können. Während dieser Ziehbewegung wird das Cordband 2 über die Aufnahmeeinrichtung 4, also den Hubtisch gezogen. Die positionsfeste Erfassungseinrichtung 19 mit nachgeschalteter Verarbeitungseinheit misst während des Ziehvorgangs die Position der Längskante des abgezogenen Cordbands. Je nach Verlauf dieser einlaufenden Kante wird die Spleißeinrichtung 5 mit dem in ihr geklemmten Ende 13 der zuvor gespleißten Materialbahn 14 horizontal verschoben, so dass die gewünschte voreingestellte Überlapplänge bzw. Kantenposition erreicht wird. Die Verwendung der Erfassungseinrichtung ist jedoch dann nicht erforderlich, wenn sichergestellt ist, dass das Cordband 2 immer mit der geforderten Toleranz zugeführt wird.

Im nächsten Schritt, wie in den Fig. 5A und 5B dargestellt ist, fahren die Bandklemmelemente 10 der Schneideinrichtung 3 in die Klemmposition und fixieren das Cordband 2, während die Schneideinrichtung 3 unter Zusammenfahren der beiden Messer 6, 7 den Bandabschnitt 2a abschneidet. Auch hier ist festzuhalten, dass die beiden Bandklemmelemente 10 nicht zwingend erforderlich ist, um das Material zu schneiden. Sie sind jedoch einer Verbesserung der Abschnittsgenauigkeit dienlich. Gleichermaßen ist es nicht erforderlich, eine Schlagschere, wie in den Figuren gezeigt, zu verwenden, alternativ wären auch andere Schneideinrichtungen, z. B. eine Rundmesserschere oder eine Rundmessersäge denkbar.

Während des Schneidvorgangs wird die Rückzugszange 9 gelöst und fährt ein Stück nach hinten weg, wie durch die Pfeile dargestellt ist, so dass der geschnittene Bandabschnitt 2a aus der Rückzugszange 9 fallen kann. Das Obermesser 6 fährt nach dem Durchschneiden des Materials wieder in die obere Ausgangsstellung zurück. Nach dem Schnitt liegt der Bandabschnitt 2a auf der Aufnahmeeinrichtung 4 auf. Diese ist mit Vakuum beaufschlagt, d.h., der Bandabschnitt 2a wird bereits während des Schnitts angesaugt und fixiert und bleibt während der nachfolgend noch beschriebenen Absenkbewegung fixiert. Dieses Ansaugen ist nicht zwingend notwendig, dient jedoch der Einhaltung der geforderten Toleranzen und ist insbesondere im Hinblick auf die hohe Arbeitsgeschwindigkeit zweckmäßig.

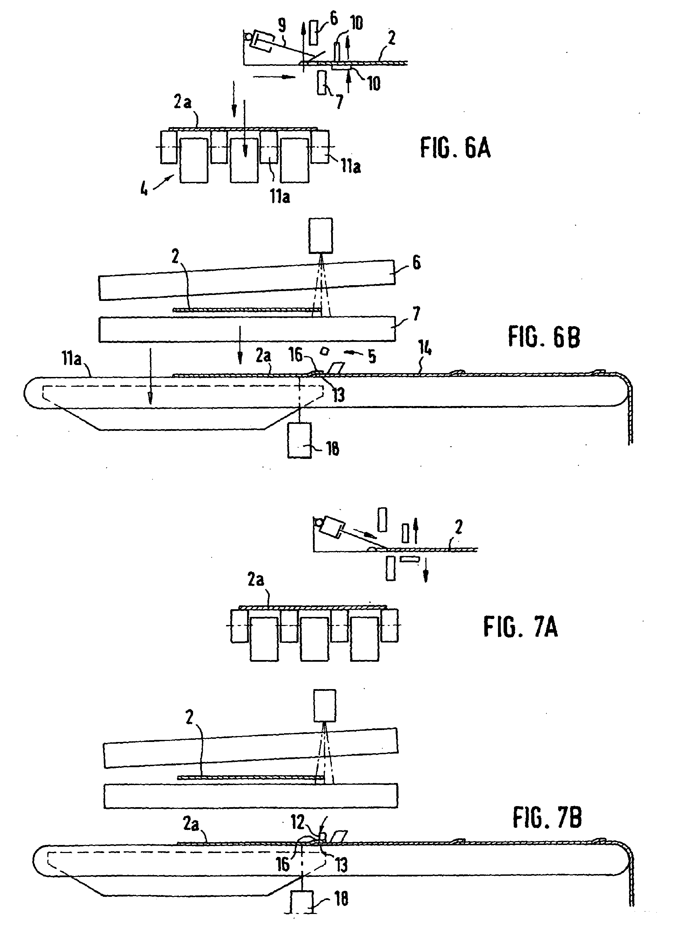

Im nächsten, in den Fig. 6A und 6B gezeigten Schritt verfährt die Aufnahmeeinrichtung 4 nach unten und legt den Bandabschnitt 2a mit seiner vorlaufenden, zu verspleißenden Bandkante 16 auf die Hinterkante 13 des bereits gespleißten Bandabschnitts 14 mit einem definierten Überlapp sowie auf die Oberseite der Transportbänder 11a ab. Zur Erzielung der eingestellten Überlapplänge ist die Spleißeinrichtung 5, sofern erforderlich, in die hierzu notwendige Position verfahren worden.

Sobald die Aufnahmeeinrichtung 4 die obere Position verlassen hat, fährt die Rückzugszange 9 zurück in die Aufnahmeposition zwischen den beiden Messern 6, 7, um unmittelbar danach die Cordbandkante zu klemmen und den nächsten Streifen nachziehen zu können. Hierzu fährt das untere Bandklemmelement 10 etwas nach oben und überdrückt hierbei das obere Bandklemmelement 10, wie durch die beiden Pfeile in Fig. 6A dargestellt ist. Hierdurch wird das Cordband 2 kantenseitig etwas vom Untermesser 7 hochgehoben, so dass die Rückzugszange 9 das Cordband 2 kantenseitig auch unterfahren und greifen kann. Die Rückzugszange 9 fährt dann in das Cordband hinein und wird geschlossen. Nach dem Schließen der Rückzugszange 9 öffnen sich die beiden Bandklemmelemente 10, so dass das Cordband nur noch von der Rückzugszange 9 geklemmt ist.

Im nächsten in den Fig. 7A und B gezeigten Schritt erfolgt nun der Spleißvorgang, wozu die Spleißleiste 12 aus der Ruhestellung in die Arbeitsstellung fährt und die Bandkante 16 fest auf die darunter liegende Bandkante 13 drückt, mithin also beide Bandabschnitte miteinander verschweißt.

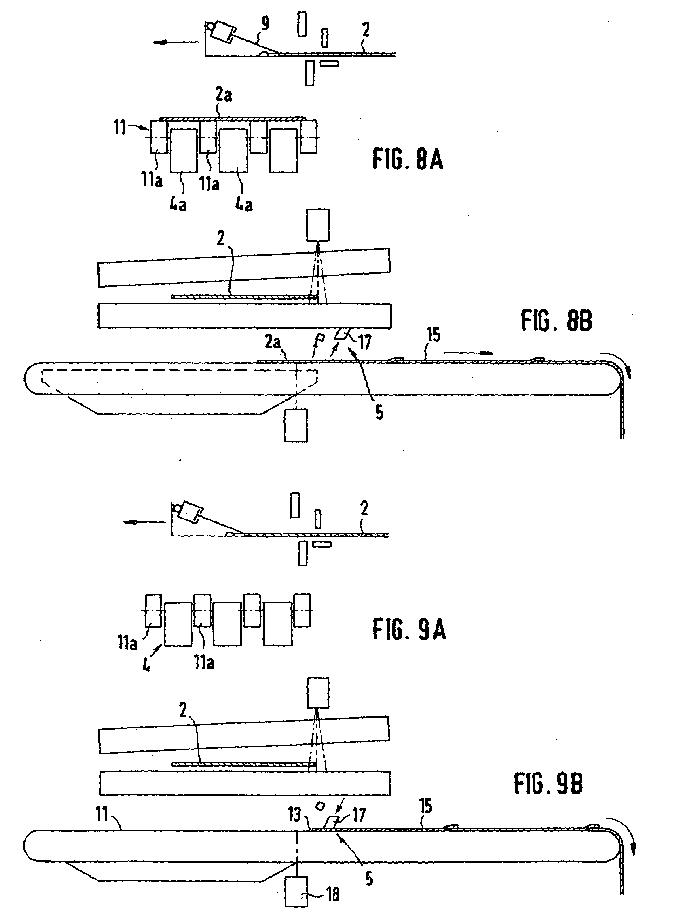

Im nächsten in den Fig. 8A und 8B gezeigten Schritt wird nun unter Ansteuerung der Transporteinrichtung 11 das nunmehr um die Länge des gerade vorher angespleißten Bandabschnitts 2a längere endlose Materialband 15 abgezogen. Hierzu öffnen sich die Bandklemmelemente 17 der Spleißeinrichtung 5, die das Materialband 15 bis zu diesem Zeitpunkt fixiert haben, die Transporteinrichtung 11 transportiert den Materialstreifen 15 durch die Spleißeinrichtung 5 hindurch.

Das Transportband 11 besteht, wie beschrieben, aus einzelnen Transportbändern 11a, auch Bandspuren genannt, die jeweils zwischen den einzelnen Aufnahmeabschnitten 4a angeordnet bzw. welche Teile zwischeneinander einfahren. Der Antrieb dieser einzelnen Transportbänder 11a erfolgt über eine gemeinsame Antriebswelle. Das Transportband 11 selbst ist bevorzugt mit Vakuum beaufschlagt, um das gespleißte Materialband 15 beim Abtransport zu fixieren, wobei diese Vakuumfixierung für den eigentlichen Prozess prinzipiell nicht zwingend notwendig ist, jedoch im Hinblick auf die mit der erfindungsgemäßen Vorrichtung erreichbaren hohen Arbeitsgeschwindigkeiten und Beschleunigungen zweckmäßig ist.

Während des in diesem Schritt gezeigten Abtransports beginnt bereits der erneute Rückzug der Rückzugszange 9, es wird erneut ein Materialstreifen in die Schneideinrichtung 3 gefördert. Der Zeitpunkt für den Start des Rückzugs ist variabel. Je nach zu ziehender Abschnittsbreite wird genau zu dem Zeitpunkt losgefahren, der sicherstellt, dass am Ende des Ziehvorgangs die Aufnahmeeinrichtung 4 in jedem Fall in der oberen Stellung ist und am Ende des Ziehvorgangs das über sie gezogene Cordband unterstützt. Ein freier Durchhang des Materials wird verhindert, ein solcher würde gegebenenfalls zu Ungenauigkeiten führen.

Im nächsten in den Fig. 9A und 9B gezeigten Schritt wird nunmehr das gespleißte Materialband 15 mit ihrer Hinterkante 13 bezüglich der Spleißeinrichtung ausgerichtet. Zwischen den einzelnen Transportbändern 11a sind, wie beschrieben, Sensorelemente in Form beispielsweise der Lichtschranken 18 angeordnet, die das Materialende erkennen. Die Sensorelemente bzw. Lichtschranken werden frei, wenn das Materialende, also die Hinterkante 13 über sie transportiert wird. Bevorzugt ist jedem Sensorelement 18 ein Bandklemmelement 17, das in Form eines Niederhalterpins ausgebildet ist, in der Spleißeinrichtung 5 zugeordnet ist, welches Klemmelement 17 bei Freiwerden der Lichtschranke 18 abwehrt und das Material in der Spleißeinrichtung 5 klemmt. Das Transportband 11 fährt so lange weiter, bis alle Lichtschranken 18 frei bzw. alle Bandklemmelemente 17 niedergefahren sind. Dadurch, dass das Transportband 11 weiterfährt, ist sichergestellt, dass die Materialkante 13 des Materialbandendes exakt gerade ausgerichtet ist, nachdem über die einzelnen Bandklemmelemente 17 eine lokal optimale Klemmung möglich ist. Im Idealfall bei exakt gerader Bandkante werden alle Lichtschranken 18 zum gleichen Zeitpunkt freigegeben.

Nach dem Positionieren der Materialbahn in der Spleißeinrichtung fährt die Aufnahmeeinrichtung 4 wieder nach oben, nachdem nunmehr in Folge des Bandabzugs der vertikale Bewegungsweg wieder frei ist, um das Cordband 2 zum Ende des Ziehvorgangs zu unterstützen, wie bereits bezüglich der Fig. 8A, 8B ausgeführt wurde. Sobald die Aufnahmeeinrichtung 4 in der oberen, in Fig. 4A, 4B gezeigten Position ist, beginnt der nächste Zyklus.

Abschließend ist festzuhalten, dass die in den Fig. 3 - 10 gezeigten Schritte innerhalb eines Zyklus zum Teil nacheinander, zum Teil auch zeitgleich ablaufen, die Steuerung der einzelnen Komponenten erfolgt also im Hinblick auf einen optimalen und möglichst schnellen Arbeitsablauf.

## Patentansprüche

1. Vorrichtung zum Schneiden und Verspleißen von Bandabschnitten eines klebrigen Bandes, insbesondere eines Cord-, vorzugsweise eines Textilcordbandes, umfassend eine Schneideinrichtung (3) mit zugeordneter Fördereinrichtung zum Bewegen des zu schneidenden Bandes durch die Schneideinrichtung (3) sowie eine Spleißeinrichtung (5) zum Verspleißen der Kante des geschnittenen Bandabschnitts mit einer Kante eines zuvor verspleißten Bandabschnitts, sowie eine der Schneideinrichtung (3) unmittelbar nachgeschaltete Aufnahmeeinrichtung (4) für den geschnittenen Bandabschnitt (2a), **dadurch gekennzeichnet, dass** die Aufnahmeeinrichtung (4) zum Bewegen des Bandabschnitts (2a) in eine tieferliegende Spleißposition, in welcher die zu verspleißende Kante (16) des Bandabschnitts (2a) in einer definierten Lagebeziehung zur mit ihr zu verspleißenden Kante (13) des zuvor gespleißten Bandabschnitts (14), die sich in der der Aufnahmeeinrichtung (4) unmittelbar nachgeschalteten Spleißeinrichtung (5) befindet, positioniert ist, zwischen einer oberen Stellung und einer unteren Stellung bewegbar ist.

2. Vorrichtung nach Anspruch 1, **dadurch gekennzeichnet, dass** die Aufnahmeinrichtung (4) eine eine Vertikalbewegung oder eine eine Vertikalbewegungskomponente enthaltende Schwenkbewegung durchführenden Hubeinrichtung ist.

3. Vorrichtung nach Anspruch 1 oder 2, **dadurch gekennzeichnet, dass** die Aufnahmeeinrichtung (4) in der oberen Stellung bereits den noch zu schneidenden Bandabschnitt (2a), der mittels der Fördereinrichtung (8, 9) über die Aufnahmeeinrichtung (4) bewegt wird, auflagert.

4. Vorrichtung nach einem der vorangehenden Ansprüche, **dadurch gekennzeichnet, dass** die Aufnahmeeinrichtung (4) zum lagefesten Fixieren des Bandabschnitts (2a) während und nach dem Schneiden ausgebildet ist.

5. Vorrichtung nach Anspruch 4, **dadurch gekennzeichnet, dass** die Aufnahmeeinrichtung (5) zum Fixieren Ansaugmittel aufweist.

6. Vorrichtung nach einem der vorangehenden Ansprüche, **dadurch gekennzeichnet, dass** eine Transporteinrichtung (11, 11a) zum Fördern der verspleißten Bandabschnitte (14, 15) vorgesehen ist, die sich bis in den Arbeitsbereich der Aufnahmeeinrichtung (4), die in der unteren Stellung mit ihrer den Bandabschnitt (2a) tragenden Oberseite in der Transportebene der Transporteinrichtung (11) oder tiefer befindet, erstreckt.

7. Vorrichtung nach Anspruch 6, **dadurch gekennzeichnet, dass** die Transporteinrichtung (11) aus mehreren parallelen Transportbändern (11a) und/oder die Aufnahmeeinrichtung (4) aus mehreren parallelen Aufnahmeabschnitten (4a) besteht.

8. Vorrichtung nach einem der vorangehenden Ansprüche, **dadurch gekennzeichnet, dass** ein oder mehrere Sensorelemente (18), insbesondere Lichtschranken, zum Erfassen der Hinterkante (13) des zuvor gespleißten Bandabschnitts (14) vorgesehen sind, wobei der Betrieb der oder einer Transporteinrichtung (11) zum Fördern der verspleißten Bandabschnitte (14, 15) in Abhängigkeit der Sensorerfassung erfolgt.

9. Vorrichtung nach einem der vorangehenden Ansprüche, **dadurch gekennzeichnet, dass** die Spleißeinrichtung (5) bezüglich der Aufnahmeeinrichtung (4) horizontal verfahrbar ist.

10. Vorrichtung nach Anspruch 9, **dadurch gekennzeichnet, dass** eine Erfassungseinrichtung (19) zum Erfassen der Lage wenigstens einer Längskante (20) des zu schneidenden Bandes (2) vorgesehen ist, und dass die Spleißeinrichtung (5) in Abhängigkeit der erfassten Kantenlage positionierbar ist.

11. Vorrichtung nach Anspruch 8 und einem der Ansprüche 9 oder 10, **dadurch gekennzeichnet, dass** das oder die Sensorelemente (18) zusammen mit der Spleißeinrichtung (5) verfahrbar sind.

12. Vorrichtung nach einem der vorangehenden Ansprüche, **dadurch gekennzeichnet, dass** an der Schneideinrichtung (3) und/oder der Spleißeinrichtung (5) Bandklemmelemente (10, 17) zum bedarfsabhängigen Fixieren des Bandes (2) oder des gespleißten Bandabschnitts (14) vorgesehen sind.

13. Verfahren zum Herstellen eines Endlosbands aus einzelnen miteinander verspleißten Bandabschnitten eines klebrigen Bands, insbesondere eines Cord-, vorzugsweise eines Textilcordbands, wobei von dem mittels einer Fördereinrichtung durch eine Schneideinrichtung (3) geförderten Band ein Bandabschnitt geschnitten und mittels einer der Schneideinrichtung (3) unmittelbar nachgeschalteten Aufnahmeeinrichtung (4) in eine gegenüber der Schneidposition tieferliegende Spleißposition bewegt wird, in welcher die zu verspleißende Kante des Bandabschnitts automatisch in einer definierten Lagebeziehung zur mit ihr zu verspleißenden Kante eines zuvor gespleißten Bandabschnitts, die in der der Aufnahmeeinrichtung (4) unmittelbar nachgeschalteten Spleißeinrichtung (5) ruht, positioniert ist, wonach unmittelbar die beiden Bandabschnitte verspleißt werden.

14. Verfahren nach Anspruch 13, **dadurch gekennzeichnet, dass** der geschnittene Bandabschnitt in einer Vertikalbewegung oder eine vertikale Bewegungskomponente aufweisenden Bewegung in die tieferliegende Spleißposition bewegt wird.

15. Verfahren nach Anspruch 13 oder 14, **dadurch gekennzeichnet, dass** das mit der Fördereinrichtung über die in der oberen Bandaufnahmestellung befindliche Aufnahmeeinrichtung (4) bewegte Band während des Schneidens auf der Aufnahmeeinrichtung (4) aufliegt.

16. Verfahren nach Anspruch 15, **dadurch gekennzeichnet, dass** das Band während des Schneidens an der Aufnahmeeinrichtung (4) fixiert wird, insbesondere über eine Saugeinrichtung angesaugt wird.

17. Verfahren nach einem der Ansprüche 13 bis 16, **dadurch gekennzeichnet, dass** kontinuierlich die Lage wenigstens einer Längskante (20) des zu schneidenden Bands mittels einer Erfassungseinrichtung (19) ermittelt und die Spleißeinrichtung (5) in Abhängigkeit der erfassten Kantenlage durch horizontales Verfahren bezüglich der Aufnahmeeinrichtung (4) positioniert wird.

18. Verfahren nach einem der Ansprüche 13 bis 17, **dadurch gekennzeichnet, dass** das Band während des Schneidens und/oder der bereits gespleißte Bandabschnitt während des Anspleißens eines weiteren Bandabschnitts oder während der Horizontalverschiebung des Spleißeinrichtung (5) über Bandklemmelemente (10, 17) fixiert werden.

## Claims

1. Apparatus for cutting and splicing lengths of an adhesive strip, in particular a corded, preferably a textile corded strip, comprising a cutting device (3) with associated conveying device for moving the strip to be cut through the cutting device (3) and a splicing device (5) for splicing the edge of the cut length of strip to an edge of a previously spliced length of strip, and a receiving device (4) for the cut length of strip (2a), which receiving device is connected directly in series to the cutting device (3), **characterised in that** the receiving device (4) for moving the length of strip (2a) into a lower-lying splicing position, in which the edge (16) to be spliced of the length of strip (2a) is positioned in a specified position relative to the edge (13) to be spliced therewith of the length of strip (14) previously spliced - the said length of strip (14) being located in the splicing device (5) directly connected in series to the receiving device (4) - is movable between an upper position and a lower position.

2. Apparatus according to claim 1, **characterised in that** the receiving device (4) is a hydraulic device performing a vertical movement or a pivoting movement comprising a vertical movement component.

3. Apparatus according to claim 1 or 2, **characterised in that the** receiving device (4) rests in the upper position already on the strip length (2a) which is yet to be cut and which is moved by means of the conveying device (8, 9) over the receiving device (4).

4. Apparatus according to one of the preceding claims, **characterised in that** the receiving device (4) is formed for the stationary fixing of the band length (2a) during and after cutting.

5. Apparatus according to claim 4, **characterised in that** the receiving device (5) has suction means for fixing.

6. Apparatus according to one of the preceding claims, **characterised in that** a conveying device (11, 11 a) is provided for conveying the spliced strip lengths (14, 15) and extends up to the working region of the receiving device (4), which is located in the lower position with its upper face supporting the strip length (2a) in the plane of conveying of the conveying device (11) or lower.

7. Apparatus according to claim 6, **characterised in that** the conveying device (11) consists of plural parallel conveyor belts (11 a) and/or the receiving device (4) consists of plural parallel receiving sections (4a).

8. Apparatus according to one of the preceding claims, **characterised in that** one or more sensors (18) in particular light barriers, are provided for detecting the trailing edge (13) of the previously spliced strip length (14), and the operation of the or a conveyor devices (11) takes place to convey the spliced strip lengths (14, 15) dependently on the sensor detection.

9. Apparatus according to one of the preceding claims, **characterised in that** the splicing device (5) may be moved horizontally relative to the receiving device (4).

10. Apparatus according to claim 9, **characterised in that** a detection device (19) is provided for detecting the position of at least one longitudinal edge (20) of the strip to be cut (2) and **in that** the splicing device (5) is positionable according to the edge position detected.

11. Apparatus according to claim 8 and either of claims 9 or 10, **characterised in that** the sensors (18) are movable together with the splicing device (5).

12. Apparatus according to one of the preceding claims, **characterised in that** on the cutting device (3) and/or the splicing device (5), strip clamping elements (10, 17) are provided for fixing the strip (2) or spliced band length (14) as required.

13. Method of manufacturing an endless strip from individually spliced strip lengths of an adhesive strip, in particular of a corded, preferably textile corded strip, wherein, of the strip conveyed by means of one conveyor device through a cutting device (3), one strip length is cut and moved by means of a receiving device (4) connected directly in series to the cutting device (3) into a splicing position which is lower relative to the cutting position, and in this position the edge to be spliced of the strip length is automatically positioned in a specified position relative to the edge to be spliced thereto of a previously spliced strip length, which is resting in the splicing device (5) connected directly in series to the receiving device (4), whereupon the two strip lengths are immediately spliced.

14. Method according to claim 13, **characterised in that** the cut strip length is moved in a vertical motion or a motion comprising a vertical movement component, into the lower-lying splicing position.

15. Method according to claim 13 or 14, **characterised in that** the strip moved with the conveying device over the receiving device (4) located in the upper strip-receiving position rests during cutting on the receiving device (4).

16. Method according to claim 15, **characterised in that** the strip is fixed during cutting on the receiving device (4), in particular is fixed by suction via a suction device.

17. Method according to one of claims 13 to 16, **characterised in that** the position of at least one longitudinal edge (20) of the strip to be cut is continuously determined by means of a detection device (19) and the splicing device (5) is positioned according to the edge position detected by horizontal movement relative to the receiving device (4).

18. Method according to one of claims 13 to 17, **characterised in that** the strip is fixed during cutting and/or the already spliced strip length is fixed during splicing-on of a further strip length or during the horizontal displacement of the splicing device (6) via strip clamping elements (10, 17).

## Revendications

1. Dispositif pour couper et épisser des tronçons d'une bande adhésive, en particulier une bande de corde, de préférence une bande textile de corde, comportant une unité de coupe (3) avec un convoyeur associé pour déplacer la bande à couper à travers l'unité de coupe (3), ainsi qu'un dispositif d'épissure (5) pour épisser le bord du tronçon de bande coupé avec un bord d'un tronçon de bande épissé précédemment, ainsi qu'un dispositif de réception (4), monté directement en aval de l'unité de coupe (3) et destiné à recevoir le tronçon de bande (2a) coupé, **caractérisé en ce que,** pour déplacer le tronçon de bande (2a) dans une position de jonction plus basse, dans laquelle le bord (16) à épisser du tronçon de bande (2a) est positionné dans un rapport de position défini par rapport au bord (13) à épisser du tronçon de bande (14) épissé précédemment, qui est situé dans le dispositif d'épissure (5) monté directement en aval du dispositif de réception (4), le dispositif de réception (4) peut être déplacé entre une position haute et une position basse.

2. Dispositif selon la revendication 1, **caractérisé en ce que** le dispositif de réception (4) est un dispositif de levage effectuant un mouvement vertical ou un mouvement de pivotement contenant la composante de mouvement vertical.

3. Dispositif selon la revendication 1 ou 2, **caractérisé en ce que** le dispositif de réception (4) dans la position haute supporte déjà le tronçon de bande (2a) qui doit encore être coupé et qui est déplacé au moyen du convoyeur (8, 9) au-dessus du dispositif de réception (4).

4. Dispositif selon l'une quelconque des revendications précédentes, **caractérisé en ce que** le dispositif de réception (4) est réalisé pour immobiliser dans sa position le tronçon de bande (2a) pendant et après la coupe.

5. Dispositif selon la revendication 4, **caractérisé en ce que** le dispositif de réception (4) comporte des moyens d'aspiration pour l'immobilisation.

6. Dispositif selon l'une quelconque des revendications précédentes, **caractérisé en ce qu'**il est prévu un dispositif de transport (11, 11a), qui est destiné à transporter les tronçons de bande (14, 15) épissés et qui s'étend jusque dans la zone de travail du dispositif de réception (4) qui, dans la position basse, est situé avec sa face supérieure, portant le tronçon de bande (2a), dans le plan de transport du dispositif de transport (11) ou plus bas.

7. Dispositif selon la revendication 6, **caractérisé en ce que** le dispositif de transport (11) est formé par plusieurs bandes transporteuses (11a) parallèles et/ou le dispositif de réception (4) est formé par plusieurs tronçons de réception (4a) parallèles.

8. Dispositif selon l'une quelconque des revendications précédentes, **caractérisé en ce qu'**il est prévu un ou plusieurs éléments de détection (18), en particulier des barrières photoélectriques, destinés à détecter le bord arrière (13) du tronçon de bande (14) épissé précédemment, le fonctionnement du ou d'un dispositif de transport (11), destiné à transporter les tronçons de bande (14, 15) épissés, est assuré en fonction de la détection de l'élément de détection.

9. Dispositif selon l'une quelconque des revendications précédentes, **caractérisé en ce que** le dispositif d'épissure (5) peut être déplacé horizontalement par rapport au dispositif de réception (4).

10. Dispositif selon la revendication 9, **caractérisé en ce qu'**il est prévu un dispositif d'enregistrement (19) destiné à enregistrer la position d'au moins un bord longitudinal (20) de la bande (2) à couper, et **en ce que** le dispositif d'épissure (5) peut être positionné en fonction de la position du bord enregistrée.

11. Dispositif selon la revendication 8 et une des revendications 9 ou 10, **caractérisé en ce que** l'élément ou les éléments de détection (18) peuvent être déplacés conjointement avec le dispositif d'épissure (5).

12. Dispositif selon l'une quelconque des revendications précédentes, **caractérisé en ce que** sur l'unité de coupe (3) et/ou le dispositif d'épissure (5) sont prévus des éléments de serrage de la bande (10, 17) destinés à immobiliser en fonction des besoins la bande (2) ou le tronçon de bande (14) épissé.

13. Procédé de réalisation d'une bande continue formée par différents tronçons, épissés les uns aux autres, d'une bande adhésive, en particulier une bande de corde, de préférence une bande textile de corde, dans lequel procédé un tronçon de bande est coupé dans la bande transportée au moyen d'un convoyeur à travers une unité de coupe (3) et est déplacé, au moyen d'un dispositif de réception (4) monté directement en aval de l'unité de coupe (3), dans une position de jonction plus basse que la position de coupe et dans laquelle le bord à épisser du tronçon de bande est positionné automatiquement dans un rapport de position défini par rapport au bord à épisser d'un tronçon de bande épissé précédemment, qui est situé dans le dispositif d'épissure (5) monté directement en aval du dispositif de réception (4), à la suite de quoi les deux tronçons de bande sont épissés.

14. Procédé selon la revendication 13, **caractérisé en ce que** le tronçon de bande coupé est déplacé dans un mouvement vertical ou un mouvement comportant une composante de mouvement vertical, dans la position de jonction située plus bas.

15. Procédé selon la revendication 13 ou 14, **caractérisé en ce que** la bande, déplacée par le convoyeur au-dessus du dispositif de réception (4), situé dans la position haute de réception de la bande, repose pendant la coupe sur le dispositif de réception (4).

16. Procédé selon la revendication 15, **caractérisé en ce que** pendant la coupe, la bande est immobilisée sur le dispositif de réception (4), en particulier est aspirée par un dispositif d'aspiration.

17. Procédé selon l'une quelconque des revendications 13 à 16, **caractérisé en ce que** la position d'au moins un bord longitudinal (20) de la bande à couper est déterminée en continu par un dispositif d'enregistrement (19), et le dispositif d'épissure (5) est positionné, en fonction de la position du bord enregistrée, au moyen d'un déplacement horizontal par rapport au dispositif de réception (4).

18. Dispositif selon l'une quelconque des revendications 13 à 17, **caractérisé en ce que** la bande pendant la coupe et/ou le tronçon de bande déjà épissé pendant la jonction d'un autre tronçon de bande ou pendant le déplacement horizontal du dispositif d'épissure (5) est immobilisée au moyen d'éléments de serrage de la bande (10, 17).
